# EUROPÄISCHE PATENTSCHRIFT

(11) **EP 0 663 259 B1**
(45) Veröffentlichungstag und Bekanntmachung des Hinweises auf die Patenterteilung: **11.06.1997**
(21) Anmeldenummer: 94117958.2
(22) Anmeldetag: 14.11.1994
(51) Int. Cl.: B23K 9/20

(54) **Schweissvorrichtung für Bolzen mit Ringquerschnitt**
Welding apparatus for studs of annular cross-section
Appareil de soudage pour goujons de section annulaire

(30) Priorität: 14.01.1994 DE 4400957
(43) Veröffentlichungstag der Anmeldung: 19.07.1995
(73) Patentinhaber: HBS BOLZENSCHWEISSSYSTEME GmbH & Co. KG, D-85221 Dachau (DE)
(72) Erfinder: Mecke, Hubert,Prof.Dr.-Ing., D-39126 Magdeburg (DE); Musikowski, Hans Dieter,Dipl.-Ing., D-39128 Magdeburg (DE); Reiter, Thomas,Dr.-Ing., D-85221 Dachau (DE)
(74) Vertreter: Strehl Schübel-Hopf Groening & Partner

(56) Entgegenhaltungen:
- DE-A- 1 565 003
- DE-A- 3 828 459
- FR-A- 2 684 909
- GB-A- 645 903

## Beschreibung

Eine Schweißvorrichtung für Bolzen mit im wesentlichen ringförmigem Querschnitt gemäß dem ersten Teil des Patentanspruchs 1 ist aus DE-A-1 565 003 bekannt.

Die den Bolzenhalter umgebende Elektromagnetspule dient dazu, den Lichtbogen um die anzuschweißende ringförmige Fläche des Bolzens herum zu bewegen. Bei der bekannten Vorrichtung ist diese Spule von einem Flußführungsteil umgeben, dessen beide Enden über je eine Luftspalt an den Bolzen selbst ankoppeln. Von dem durch die Spule erzeugten gesamten Magnetfluß ist nur ein geringer Teil für die Lichtbogenbewegung effektiv.

Der Erfindung liegt die Aufgabe zugrunde, eine Schweißvorrichtung nach dem Oberbegriff des Anspruchs 1 so weiterzubilden, daß sich Hohlprofilbolzen sicher, fest und schnell anschweißen lassen. Gleichzeitig soll die Vorrichtung so kompakt und einfach gestaltet sein, daß sie sich an bekannten Bolzenschweißgeräten montieren und auch in Verbindung mit handgeführten Bolzenschweißpistolen im Montageeinsatz nutzen läßt.

Die erfindungsgemäße Lösung dieser Aufgabe ist im Anspruch 1 gekennzeichnet. Das danach vorgesehene Flußführungsteil mit seinem kegelstumpfförmigen Feldformer bewirkt, daß im Schweißspalt eine ausgeprägte, zur Bolzenachse radial verlaufende Magnetfeldkomponente vorliegt, die für die Bewegung des Lichtbogens effektiv ist. Der Feldformer verringert die Möglichkeit, daß das von der Magnetspule erzeugte Magnetfeld in das Werkstück einkoppelt, wodurch die besagte radiale Magnetfeldkomponente geschwächt würde.

Ferner bewirkt die Kegelstumpfform des ferromagnetischen Feldformers eine optimale magnetische Abschirmung der Schweißstelle gegen äußere feldverzerrende Einflüsse und resultiert in einem sehr kleinen und kompakten Aufbau. Die Vorrichtung läßt sich somit problemlos auch an handgeführten Bolzenschweißpistolen montieren, dadurch auch im mobilen Montageeinsatz flexibel einsetzen und gestattet Arbeiten auch an schwerer zugänglichen Stellen.

Spule und Flußführungsteil bilden vorzugsweise eine gemeinsame mechanische Baugruppe, die gegenüber dem Bolzenschweißgerät mechanisch fest aber axial einstellbar und gegenüber dem Werkstück durch einstellbare Distanzhalter lokal fixiert ist. Zur Durchführung der Axialbewegung des rohrförmigen Bolzens während des Bolzenschweißens ist der Bolzenhalter mit der Hub- und Senkvorrichtung des Bolzenschweißgerätes mechanisch verbunden.

Weiterhin ist der Bolzenhalter zur Speisung des Schweißlichtbogens elektrisch mit einem Anschluß der Schweißstromquelle verbunden. Die Spule wird mindestens während der Lichtbogenbrennphase elektrisch erregt.

Durch die erfindungsgemäße Vorrichtung wird erreicht, daß die magnetischen Flußlinien bei Erregung der Spule überwiegend und nahezu auf ihrem gesamten Weg in magnetisch gut leitenden Material durch Teile der Vorrichtung und des rohrförmigen Bolzens verlaufen. Erst in der Nähe der Schweißstelle durchsetzen die aus der ringförmigen Polfläche des Feldformers austretenden Flußlinien den Luftraum und weisen dabei eine im Schweißspalt radialsymmetrische Feldkomponente auf, die nach erfolgter Hubzündung des Schweißlichtbogens zu dessen gezielter Bewegung längs der zu verschweißenden kreisring- oder auch nur ringförmigen Querschnittsfläche des rohrförmigen Bolzens und des Werkstücks führt. Auf diese Weise ermöglicht die erfindungsgemäße Vorrichtung zum Bolzenschweißen auch das qualitätsgerechte Anschweißen von rohrförmigen Bolzen längs einer ringförmigen Schweißnaht an ein anderes Werkstück.

Das Werkstück selbst ist bei der erfindungsgemäßen Vorrichtung nicht aktiv in die Magnetfeldgestaltung einbezogen. Dadurch gewährleistet die Vorrichtung weitgehend gleichbleibende Feldverhältnisse zur Lichtbogenbewegung auch bei sehr unterschiedlich gestalteten Werkstücken.

Für unkomplizierte Handhabung und höhere Zuverlässigkeit der erfindungsgemäßen Vorrichtung hat es sich als zweckmäßig erwiesen, den Feldformer sowohl gegenüber dem rohrförmigen Bolzen, als auch gegenüber dem Werkstück elektrisch isoliert anzuordnen. Ebenso ist es auch möglich, daß Feldformer und/oder magnetischer Rückschluß aus elektrisch nicht oder sehr schlecht leitenden ferromagnetischem Material bestehen oder daß der Feldformer ganz oder teilweise mit einer elektrisch isolierenden Schicht überzogen ist.

Es ist auch möglich, zwischen der ringförmigen Polfläche des Feldformers und dem rohrförmigen Bolzen sowie zwischen Feldformer und Werkstück eine elektrisch nichtleitende Hülse, z.B. einen Keramikring, anzuordnen, der eine Abdeckung der Schweißstelle und die Formung eines Schweißwulstes bewirkt und der in der erfindungsgemäßen Vorrichtung außerdem als isolierende Distanzhülse zwischen Feldformer und Werkstück dient.

Weiterhin können Teile der Vorrichtung so ausgestaltet sein, daß sie zur Zuführung eines Schutzgases und zur Ausbildung eines die Schweißstelle allseitig umschließenden Schutzgasschleiers dienen. In vorteilhafter Weise weist hierzu insbesondere der Bolzenhalter mindestens eine Durchgangsbohrung auf, die mit einer Schutzgasversorgung verbunden ist und vorzugsweise direkt mit dem Innenraum des rohrförmigen Bolzens und/oder des Feldformers in Verbindung steht.

Die Spanneinrichtung des Bolzenhalters kann entweder als Spannhülse für die Halterung des rohrförmigen Bolzens an seinem äußeren Mantel aus vorzugsweise unnagnetischem Werkstoff oder als Spannzapfen für die Halterung in der Bohrung des Bolzens aus vorzugsweise ferromagnetischem Material ausgeführt sein.

Die Erfindung wird nachfolgend an einem Ausführungsbeispiel näher erläutert. Dazu zeigt die zugehörige Zeichnung eine schematische Schnittdarstellung der erfindungsgemäßen Vorrichtung zum Bolzenschweißen.

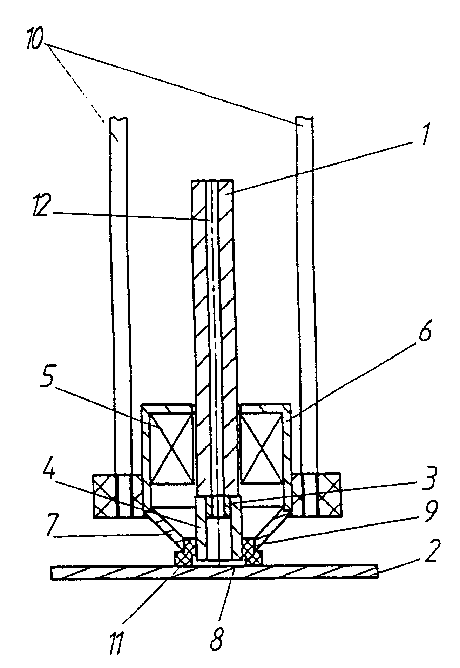

Gemäß der Zeichnung weist die Vorrichtung einen aus ferromagnetischem Werkstoff bestehenden Bolzenhalter **1** auf, der an seinem dem Werkstück **2** zugewandten Ende in einer als Spannzapfen ausgebildeten Spanneinrichtung **3** den anzuschweißenden rohrförmigen Bolzen **4** trägt. In koaxialer Anordnung hierzu ist eine elektrisch erregbare ringförmige Spule **5** angeordnet, die in einen topfförmig ausgebildeten magnetischen Rückschluß **6** eingebettet ist. Der Rückschluß **6** steht an seinem einen Ende mit dem Bolzenhalter **1** und an seinem anderen Ende mit einem aus ferromagnetischem Material bestehenden Feldformer **7** in magnetischer Wirkverbindung.

Der Feldformer **7** ist kegelstumpfähnlich ausgebildet und so positioniert, daß seine verlängerte Mantellinie auf die Schweißstelle **8** weist. Die ringförmig ausgebildete Flußaustritts- oder Polfläche **9** des Feldformers **7** umschließt dabei die Schweißstelle **8** in geringem Abstand. Zwischen Feldformer **7** und Werkstück **2** ist eine isolierende Distanzhülse **11** angeordnet, auf die sich die Vorrichtung bei Gebrauch gegenüber dem Werkstück **2** abstützt.

Die Spule **5**, der magnetische Rückschluß **6** und der Feldformer **7** bilden eine gemeinsame Baugruppe. Ihre Befestigung am Bolzenschweißgerät erfolgt über zwei axial einstellbare Stativsäulen **10**.

Die elektrische Erregung der Spule **5** erfolgt mindestens während der Lichtbogenbrennphase.

Zur Zuführung eines Schutzgases zur Schweißstelle **8** weist der Bolzenhalter **1** eine durchgehende axiale Bohrung **12** auf.

## Patentansprüche

1. Schweißvorrichtung für Bolzen mit im wesentlichen ringförmigem Querschnitt, umfassend
einen Bolzenhalter (**1**), der senkrecht zu einer Werkstückoberfläche, an der der Bolzen (**4**) angeschweißt werden soll, bewegbar ist,
eine Einrichtung zur Erzeugung eines Lichtbogens zwischen dem Bolzen (**4**) und der Werkstückoberfläche,
eine Elektromagnetspule (**5**) zur Erzeugung eines auf den Lichtbogen einwirkenden Magnetfeldes, und
ein an die Elektromagnetspule (**5**) angekoppeltes Flußführungsteil (**6, 7**), das eine den Schweißspalt umgebenden im wesentlichen ringförmige Polfläche (**9**) zur Erzeugung einer im Schweißspalt radial zum Bolzen (**4**) verlaufenden Magnetfeldkomponente bildet,
dadurch **gekennzeichnet**,
daß die Elektromagnetspule (**5**) den Bolzenhalter (**1**) umgibt, und
daß die ringförmige Polfläche (**9**) am Ende eines kegelstumpfförmigen, mit seiner verlängerten Mantellinie auf die Schweißstelle (**8**) weisenden Feldformers (**7**) ausgebildet ist.

2. Vorrichtung nach Anspruch **1**, dadurch gekennzeichnet, daß das Flußführungsteil (**6, 7**) einen zu dem Bolzenhalter (**1**) koaxialen, die Elektromagnetspule (**5**) topfförmig umgebenden Rückschluß (**6**) aufweist, der an seinem unteren Ende den kegelstumpfförmigen Feldformer (**7**) trägt.

3. Vorrichtung nach Anspruch **1** oder **2**, dadurch gekennzeichnet, daß der kegelstumpfförmige Feldformer (**7**) an seiner Spitze ein den Bolzen (**4**) umgebendes Distanzelement (**11**) zur Abstandshalterung gegenüber der Werkstückoberfläche trägt.

4. Vorrichtung nach einem der Ansprüche **1** bis **3**, dadurch gekennzeichnet, daß das Flußführungsteil (**6, 7**) aus elektrisch nicht oder schlecht leitendem ferromagnetischem Material besteht.

5. Vorrichtung nach einem der Ansprüche **1** bis **4**, dadurch gekennzeichnet, daß das Flußführungsteil (**6, 7**) mit einer elektrisch isolierenden Schicht überzogen ist.

6. Vorrichtung nach einem der Ansprüche **1** bis **5**, dadurch gekennzeichnet, daß der Bolzenhalter (**1**) eine Durchgangsbohrung (**12**) zur Zuführung eines Schutzgases an die Schweißstelle (**8**) aufweist.

7. Vorrichtung nach Anspruch **6**, dadurch gekennzeichnet, daß die Durchgangsbohrung (**12**) in den Innenraum des Flußführungsteils (**6, 7**), vorzugsweise in das Innere des rohrförmigen Bolzens (**4**), führt.

8. Vorrichtung nach einem der Ansprüche **1** bis **7**, gekennzeichnet durch eine am Bolzenhalter (**1**) vorgesehene Spanneinrichtung (**3**) zur Aufnahme des Bolzens (**4**), die als Spannhülse aus vorzugsweise unmagnetischem Material oder als Spannzapfen aus vorzugsweise ferromagnetischem Material ausgebildet ist.

9. Vorrichtung nach einem der Ansprüche **1** bis **8**, dadurch gekennzeichnet, daß die Elektromagnetspule (**5**) und das Flußführungsteil (**6, 7**) eine einheitliche mechanische Baugruppe bilden, die über Stativsäulen (**10**) axial verstellbar an einem Bolzenschweißgerät befestigbar ist.

## Claims

1. A welding apparatus for studs of substantially annular cross-section, comprising
a stud holder (**1**) which is movable perpendicularly with respect to a workpiece surface to which the stud (**4**) is to be welded,
means for generating a welding arc between the stud (**4**) and the workpiece surface,
an electromagnet coil (**5**) for generating a magnetic field that acts on the arc, and
a magnetic flux guiding portion (**6, 7**) coupled to the electromagnet coil (**5**) and having a substantially annular pole face (**9**) surrounding the welding gap for producing a magnetic field component which extends radially of the stud (**4**) within the welding gap,
**characterized** in
that the electromagnet coil (**5**) surrounds the stud holder (**1**), and
that the annular pole face (**9**) is formed at the end of the field former (**7**) the generatrix of which has a projection pointing to the welding location (**8**).

2. The apparatus of claim 1, characterised in that the flux guiding portion (**6, 7**) includes a return-path member (**6**) which extends coaxially with the stud-holder (**1**), encloses the electromagnet coil (**5**) in a pot-like manner, and at its lower end carries the frusto-conical field former (**7**).

3. The apparatus of claim 1 or 2, characterised in that the frusto-conical field former (**7**) at its tip carries a spacer element (**11**) which surrounds the stud (**4**) to keep a spacing from the workpiece surface.

4. The apparatus of any of claims 1 to 3, characterised in that the flux guiding portion (**6, 7**) is made of ferromagnetic material of no or low electrical conductivity.

5. The apparatus of any of claims 1 to 4, characterised in that the flux guiding portion (**6, 7**) is coated with an electrically insulating layer.

6. The apparatus of any of claims 1 to 5, characterised in that the stud holder (**1**) has a through-bore (**12**) for supplying a protective gas to the welding location (**8**).

7. The apparatus of claim 6, characterised in that the through-bore (**12**) leads into the interior space of the flux guiding portion (**6, 7**), preferably inside the tubular stud (**4**).

8. The apparatus of any of claims 1 to 7, characterised by chuck means (**3**) for receiving the stud (**4**), the chuck means being provided on the stud holder (**1**) and formed as a clamping sleeve of preferably non-magnetic material or as a clamping peg of preferably ferromagnetic material.

9. The apparatus on any of claims 1 to 8, characterised in that the electromagnet coil (**5**) and the flux guiding portion (**6, 7**) are formed as a structural unit adapted to be mounted on a stud welding device by support columns (**10**) in an axially adjustable manner.

## Revendications

1. Dispositif de soudage pour goujons de section sensiblement annulaire, comprenant
un porte-goujon (1) qui peut être déplacé perpendiculairement à la surface de la pièce sur laquelle le goujon (4) doit être soudé,
un dispositif pour produire un arc électrique entre le goujon (4) et la surface de la pièce,
une bobine d'électro-aimant (5) pour produire un champ électrique agissant sur l'arc électrique, et
une pièce de guidage de flux (6, 7) qui est accouplée à la bobine d'électro-aimant (5) et qui forme une face polaire sensiblement annulaire (9) qui entoure l'interstice de soudage et est destinée à générer une composante de champ électrique s'étendant radialement par rapport au goujon (4) dans l'interstice de soudage,
caractérisé en ce que
la bobine d'électro-aimant (5) entoure le porte-goujon (1), et
la face polaire annulaire (9) se trouve à l'extrémité d'un moyen tronconique de configuration de champ (7) dont la génératrice prolongée est orientée vers le site de soudage (8).

2. Dispositif selon la revendication 1, caractérisé en ce que la pièce de guidage de flux (6, 7) comporte une coiffe arrière (6) qui est coaxiale au porte-goujon (1) et entoure la bobine d'électro-aimant (5) à la manière d'un pot et qui, à son extrémité inférieure, porte le moyen tronconique de configuration de champ (7).

3. Dispositif selon la revendication 1 ou 2, caractérisé en ce que, à son sommet, le moyen tronconique de configuration de champ (7) porte un élément d'écartement (11) qui entoure le goujon (4) et qui sert à maintenir une distance par rapport à la surface de la pièce.

4. Dispositif selon l'une des revendications 1 à 3, caractérisé en ce que la pièce de guidage de flux (6, 7) est réalisée dans un matériau ferromagnétique à conduction électrique nulle ou médiocre.

5. Dispositif selon l'une des revendications 1 à 4, caractérisé en ce que la pièce de guidage de flux (6, 7) est revêtue d'une couche électriquement isolante.

6. Dispositif selon l'une des revendications 1 à 5, caractérisé en ce que le porte-goujon (1) comporte un trou débouchant (12) servant à amener un gaz protecteur au site de soudage (8).

7. Dispositif selon la revendication 6, caractérisé en ce que le trou débouchant (12) débouche dans la cavité intérieure de la pièce de guidage de flux (6, 7), de préférence à l'intérieur du goujon tubulaire (4).

8. Dispositif selon l'une des revendications 1 à 7, caractérisé par un dispositif de serrage (3) qui est prévu sur le porte-goujon (1) et sert à recevoir le goujon (4) et qui est conçu sous la forme d'une douille de serrage en matériau de préférence non magnétique ou sous la forme d'un téton de serrage en matériau de préférence ferromagnétique.

9. Dispositif selon l'une des revendications 1 à 8, caractérisé en ce que la bobine d'électro-aimant (5) et la pièce de guidage de flux (6, 7) forment un ensemble mécanique solidaire qui peut être fixé à un appareil à souder les goujons avec une possibilité de déplacement axial sur des colonnes porteuses (10).
